# EUROPÄISCHE PATENTSCHRIFT

(11) **EP 2 528 802 B1**
(45) Veröffentlichungstag und Bekanntmachung des Hinweises auf die Patenterteilung: **27.08.2014**
(21) Anmeldenummer: 10702604.9
(22) Anmeldetag: 28.01.2010
(51) Int. Cl.: B62D 7/14, B62D 7/15, G05B 13/04

(54) **VERFAHREN ZUR ÜBERWACHUNG UND ANSTEUERUNG EINES POSITIONS-STELLERS**
METHOD FOR MONITORING AND ACTUATING A POSITION ADJUSTER
PROCÉDÉ DE SURVEILLANCE ET DE COMMANDE D'UN ACTIONNEUR DE POSITIONNEMENT

(43) Veröffentlichungstag der Anmeldung: 05.12.2012
(73) Patentinhaber: Bayerische Motoren Werke Aktiengesellschaft, 80809 München (DE)
(72) Erfinder: HANK, Hans-Peter, 81545 München (DE); HONKE, Peter, 80935 München (DE); ROTHMUND, Tobias, 80995 München (DE)
(86) Internationale Anmeldenummer: PCT/EP2010/000508
(87) Internationale Veröffentlichungsnummer: WO 2011/091814

(56) Entgegenhaltungen:
- EP-A2- 1 916 416
- WO-A1-00/72100
- DE-A1- 4 446 899
- DE-A1- 10 045 385

## Beschreibung

Die Erfindung betrifft ein Verfahren zur Überwachung und Ansteuerung eines Positions-Stellers insbesondere in einem gesteuerten oder geregelten Fahrdynamik-System eines Kraftfahrzeugs, wobei das zeitliche Istverhalten des Positions-Stellers mit einem anhand eines Modells gebildeten zeitlichen Sollverhalten, dem eine obere und eine untere Verhaltensmodell-Grenze zugeordnet ist, verglichen wird, und wobei dann, wenn das Istverhalten des Positions-Stellers den durch die beiden Verhaltensmodell-Grenzen gebildeten Sollverhaltensbereich verlässt, der Positions-Steller unter zusätzlicher Berücksichtigung dieser Abweichung zwischen dem Istverhalten und dem Sollverhalten oder der Grenze des Sollverhaltensbereichs angesteuert wird. Zum technischen Umfeld wird neben der DE 100 45 385 A1 auf die EP 1 183 579 B1 verwiesen.

Wie beispielsweise die letztgenannte Schrift zeigt, werden vorliegend sog. Positions-Steller, die entweder einen Weg oder einen Winkel stellen und bei denen es sich beispielsweise um pneumatische Linearmotore oder rotierende Elektromotore handeln kann, wobei ein letztgenannnter beispielsweise in einem Hinterachs-Lenksystem eines zweiachsigen zweispurigen Kraftfahrzeugs vorgesehen sein kann, um an dessen Hinterrädern einen Lenkwinkel (oder Spurwinkel) zu stellen, mittels rechnerischer Modelle, welche das Sollverhalten des Positions-Stellers abbilden, auf elektronischem Wege überwacht. Im Falle einer mehr oder weniger starken Abweichung des Istverhaltens des Positions-Stellers von dessen Sollverhalten, d.h. dann, wenn zu einem Zeitpunkt die Ist-Position des Positions-Stellers (mehr oder weniger) signifikant von der aus dem Modell abgeleiteten Soll-Position des Positions-Stellers abweicht, wird der Positions-Steller üblicherweise hart abgeschaltet, d.h. im wesentlichen schlagartig stillgesetzt, um zu verhindern, dass sich eine möglicherweise sicherheitskritische Position des Stellers ergibt. In anderen Worten ausgedrückt wird bei einem über rechnerische Modelle erkannten Fehlverhalten des Positions-Stellers dieser in seiner aktuellen Position festgehalten, um ein schnelles Nacheilen des Positions-Stellers hin zu seiner Soll-Position zu verhindern. Üblicherweise wird dieser abgeschaltete Zustand des Positions-Stellers solange beibehalten, bis das entsprechende System völlig neu gestartet wird. Im Falle eines Elektromotors zum Stellen eines Spurwinkels an den Hinterrädern eines Kraftfahrzeugs als Positions-Steller bleibt die Hinterrad-Lenkung dann also solange außer Betrieb, bis nach einem Abstellen des Kraftfahrzeugs dieses neu gestartet wird.

Ein Nachteil einer solchen Steller-Überwachung mit direkter, harter Abschaltung des Positions-Stellers bei Auftreten einer signifikanten Ist-Soll-Abweichung ist darin zu sehen, dass eine solche harte Abschaltung zu für den Nutzer des den Positions-Steller enthaltenden Systems unerwarteten Situationen führen kann. Im genannten Anwendungsfall eines solchen Positions-Stellers als Lenkwinkel-Steller in einem Hinterachs-Lenksystem eines Kraftfahrzeuges hat eine schlagartige Abschaltung des Lenkwinkel-Stellers im Falle eines an den Hinterrädern des Fahrzeugs eingestellten Lenkwinkels den Beibehalt dieses Lenkwinkels und somit eine Spurabweichung von der Geradeaus-Stellung der Hinterräder zur Folge, was unerwünscht ist, da als Folge hiervon der Fahrer des Kraftfahrzeugs diese Spurabweichung andauernd mit seinem Lenkrad und dem davon angesteuerten Vorderachs-Lenksystem des Fahrzeugs ausgleichen muss, und zwar so lange, bis das Fahrzeug nach einem Abstellen desselben erneut in Betrieb genommen wird. Nachteiligerweise begrenzt eine harte und bis zu einem System-Neustart bleibende Abschaltung des Positions-Stellers dessen Verfügbarkeit in hohem Maße, so dass eine andernfalls in vielen mögliche sog. "Selbstheilung", im Rahmen derer sich das Istverhalten des Positions-Stellers quasi selbsttätig oder zufällig wieder an dessen Sollverhalten annähert, ausgeschlossen ist.

Aber auch die alternative grundsätzlich bekannte Möglichkeit, im Falle eines Fehlverhaltens des Positions-Stellers, d.h. bei einer signifikanten Abweichung zwischen dem Istverhalten und dem Sollverhalten desselben keinen besonderen Eingriff vorzusehen, sondern den Steller der jeweiligen Soll-Anforderung möglichst schnell nacheilen zu lassen, oder alternativ das Verhalten des Positions-Stellers überhaupt nicht zu überwachen, ist ungünstig, da sich hieraus tatsächlich sicherheitskritische Situationen - und zwar nicht nur aufgrund eines "Überraschungseffektes" für den Nutzer des Systems - ergeben können.

Eine Abhilfemaßnahme für diese geschilderte Problematik aufzuzeigen, ist Aufgabe der vorliegenden Erfindung.
Die Lösung dieser Aufgabe ist für ein Verfahren nach dem Oberbegriff des einzigen Patentanspruchs dadurch gekennzeichnet, dass die zum Angleichen des Istverhaltens an das Sollverhalten gewählte Verstellgeschwindigkeit des Positions-Stellers gegenüber der maximal möglichen Steller-Dynamik reduziert wird und dabei von der Größe der Abweichung und/oder von der seit dem Verlassen des Sollverhaltensbereichs vergangenen Zeit abhängig ist, derart, dass bei einer kleineren betragsmäßigen und/oder zeitlichen Abweichung eine höhere Dynamik gewählt wird als bei einer größeren betragsmäßigen und/oder zeitlichen Abweichung.

Grundsätzlich bekannt ist es, aus einem Verhaltensmodell und einem Offset hierzu oder aus oder mehreren unterschiedlichen Modellen eine obere und eine untere hier sog. Verhaltensmodellgrenze (über dem zeitlichen Verlauf) zu bilden, innerhalb derer sich der Positions-Steller (über der Zeit betrachtet) bewegen sollte, d.h. zwischen denen das Steller-Istverhalten liegt. Der Bereich zwischen diesen beiden Verhaltensmodellgrenzen stellt den sog. Sollverhaltensbereich dar, innerhalb dessen das Steller-Verhalten als "in Ordnung" eingestuft wird.

Verlässt jedoch der im Rahmen der Überwachung festgestellte Istwert des Positions-Stellers diesen zulässigen Sollverhaltensbereich, so wird erfindungsgemäß zu jedem Zeitpunkt unter Berücksichtigung der Differenz zwischen dem jeweiligen Ist-Positionswert (= Istverhalten) und dem jeweiligen Soll-Positionswert (= Sollverhalten) oder der Differenz zwischen dem jeweiligen Ist-Positionswert und dem zu diesem Zeitpunkt nächstliegenden Grenzwert des Sollverhaltensbereichs gezielt Einfluss auf die maximale Verstellgeschwindigkeit des Positions-Stellers genommen. Alternativ oder zusätzlich kann diese besagte Einflussnahme auch in Abhängigkeit von der Zeitdauer, welche seit dem Verlassen des Sollverhaltensbereichs vergangen ist, vorgenommen werden. Stets wird dabei die Dynamik des Stellers, d.h. die Verstellgeschwindigkeit des Positions-Stellers, gegenüber seiner maximal möglichen Verstellgeschwindigkeit beschränkt bzw. herabgesetzt (= reduziert), d.h. es soll dann der Positions-Steller mit reduzierter Dynamik betrieben werden. In diesem Zusammenhang sei darauf hingewiesen, dass sog. Stellratenbegrenzer, welche die Dynamik eines Stellers begrenzen, auch an einem Fahrzeug-Lenksystem bereits grundsätzlich bekannt sind, wozu beispielshalber auf die eingangs erstgenannte Schrift (DE 100 45 385 A1) verwiesen wird. Vorliegend (jedoch) erfolgt eine sog. Stellratenbegrenzung bzw. Begrenzung der Verstellgeschwindigkeit des Positions-Stellers nach Verlassen des zulässigen Sollverhaltensbereichs auf einen Wert, der - wie oben ausgeführt - von der Größe der Ist-Soll-Abweichung abhängig ist. Da nämlich zwischen einer Aktion des System-Nutzers, aufgrund derer der Positions-Steller tätig wird, und der vom System-Nutzer (= im Falle des genannten Fzg.-Hinterrad-Lenksystems der Fahrer des Fahrzeugs) erwarteten Reaktion des Positions-Stellers ein zeitlicher Zusammenhang bestehen muss, kann situationsabhängig über die besagte Ist-Soll-Abweichung und/oder die seit dem Verlassen des Sollverhaltensbereichs verstrichene Zeit die Reaktion des Positions-Stellers, d.h. dessen Istverhalten gefahrlos gezielt beeinflusst werden, ohne diesen hart abzuschalten. Vorteilhafterweise kann sich mit dem entsprechend geänderten Verhalten der eingestellte Positionswert des Stellers dem Sollwert annähren, so dass also selbsttätig das Istverhalten und das Sollverhalten des Positions-Stellers wieder in ausreichende Übereinstimmung gebracht werden kann, d.h. dass sich das Istverhalten schließlich wieder innerhalb des Sollverhaltensbereichs bewegt. Mit Erreichen dieses Zustands kann die zuvor begrenzte Dynamik des Positions-Stellers wieder vollständig freigegeben werden, um das zukünftige Sollverhalten darzustellen.

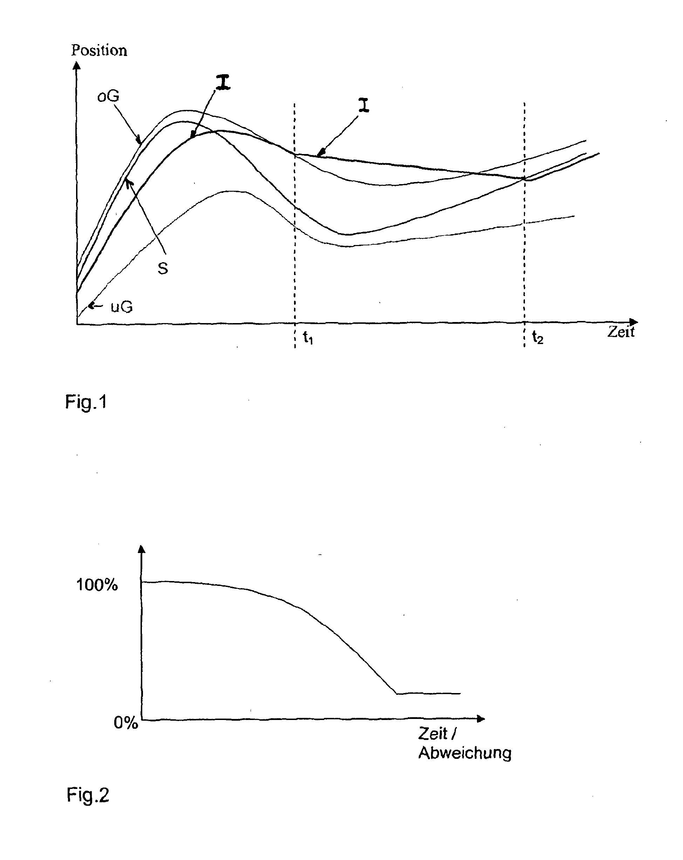

Zur Vervollständigung der obigen Erläuterung ist in der beigefügten Figur 1 beispielhaft ein zeitlicher Verlauf des Sollverhaltens und des Istverhaltens eines erfindungsgemäß angesteuerten Positions-Stellers dargestellt, während Figur 2 ein Beispiel für die erfindungsgemäße Begrenzung der Dynamik eines Positions-Stellers zeigt.

Figur 1 zeigt ein Zeit - (= Abszisse) - Positions - (= Ordinate) - Diagramm für einen Positions-Steller in einem System, bspw. in Form eines Elektromotors zum Stellen eines Lenkwinkels an den Hinterrädern eines Kraftfahrzeugs (als Fahrdynamik-System). Aufgrund irgendwelcher Vorgaben des System-Nutzers, d.h. hier des Fahrers des Kraftfahrzeugs, ergibt sich anhand eines rechnerischen Verhaltens-Modells des Positions-Stellers, welches in einer elektronischen Steuereinheit abgelegt ist und in dieser berechnet wird, die in diesem Diagramm mit dem Buchstaben "S" gekennzeichnet Kurve als zeitlicher Sollverhaltens-Verlauf. Diesem Sollverhalten S ist eine obere und eine untere Verhaltensmodell-Grenze, die mit den Buchstaben "oG" bzw. "uG" gekennzeichnet sind, zugeordnet. Zwischen der oberen Verhaltensmodellgrenze oG und der unteren Verhaltensmodellgrenze uG liegt der sog. Sollverhaltensbereich dieses Positions-Stellers.
Das tatsächliche festgestellte Istverhalten des Positions-Stellers sei durch die mit dem Buchstaben "I" gekennzeichnete Kurve dargestellt. Demnach verlässt zum Zeitpunkt t₁ der Istverhaltens-Verlauf I den Sollverhaltensbereich.

Erfindungsgemäß wird der Positions-Steller von einer elektronischen Steuereinheit daraufhin solchermaßen angesteuert, dass dessen Istverhalten I mit dem Sollverhaltens-Verlauf S in Übereinstimmung kommt, was wie dargestellt zum Zeitpunkt t₂ erfolgt. Hierfür wird jedoch der Positions-Steller nicht mit seiner maximal möglichen Verstellgeschwindigkeit verfahren, sondern mit einer demgegenüber reduzierten Verstellgeschwindigkeit bzw. Dynamik bewegt. Diese ergibt sich aus einer in der besagten elektronischen Steuereinheit abgelegten Zuordnungsvorschrift in Abhängigkeit von der von der Größe der festgestellten Ist-Soll-Abweichung und/oder von der seit dem Verlassen des Sollverhaltensbereichs (zum Zeitpunkt t₁) verstrichenen Zeit solchermaßen, dass bei einer kleineren betragsmäßigen und/oder zeitlichen Abweichung eine höhere Dynamik gewählt wird als bei einer größeren betragsmäßigen und/oder zeitlichen Abweichung. Ein solcher beispielhafter Zusammenhang ist im Diagramm der Figur 2 dargestellt, wobei auf der Abszisse die Abweichung bzw. die verstrichene Zeit und auf der Ordinate die prozentuale reduzierte Verstellgeschwindigkeit (zwischen 0% und 100%) gegenüber der maximal möglichen Verstellgeschwindigkeit, welche 100% entspricht, dargestellt ist.

Mit dem erfindungsgemäßen Verfahren wird wie weiter oben erläutert wurde eine erhöhte Verfügbarkeit des Systems erreicht, da keine harte und bis zu einem neuerlichen Systemstart verbleibende Abschaltung vorgenommen wird. Durch den Verzicht auf eine harte Systemabschaltung ergibt sich zudem ein längeres Zeitfenster, in welchem der System-Nutzer über das festgestellte Fehlverhalten des Positions-Stellers informiert werden kann, wobei noch darauf hingewiesen sei, dass durchaus eine Vielzahl von Details abweichend von obigen Erläuterungen gestaltet sein kann, ohne den Inhalt des Patentanspruchs zu verlassen.

## Patentansprüche

1. Verfahren zur Überwachung und Ansteuerung eines Positions-Stellers insbesondere in einem gesteuerten oder geregelten Fahrdynamik-System eines Kraftfahrzeugs, wobei das zeitliche Istverhalten des Positionsstellers mit einem anhand eines Modells gebildeten zeitlichen Sollverhalten, dem eine obere und eine untere Verhaltensmodell-Grenze zugeordnet ist, verglichen wird, und wobei dann, wenn das Istverhalten des Positions-Stellers den durch die beiden Verhaltensmodell-Grenzen gebildeten Sollverhaltensbereich verlässt, der Positions-Steller unter zusätzlicher Berücksichtigung dieser Abweichung zwischen dem Istverhalten und dem Sollverhalten oder der Grenze des Sollverhaltensbereichs angesteuert wird,
**dadurch gekennzeichnet, dass** die zum Angleichen des Istverhaltens an das Sollverhalten gewählte Verstellgeschwindigkeit des Positions-Stellers gegenüber der maximal möglichen Steller-Dynamik reduziert wird und dabei von der Größe der Abweichung und/oder von der seit dem Verlassen des Sollverhaltensbereichs vergangenen Zeit abhängig ist, derart, dass bei einer kleineren betragsmäßigen und/oder zeitlichen Abweichung eine höhere Dynamik gewählt wird als bei einer größeren betragsmäßigen und/oder zeitlichen Abweichung.

## Claims

1. A method for monitoring and actuating a position adjuster, more especially in a driving dynamics system of a motor vehicle controlled in an open-loop or closed-loop manner, wherein the actual behaviour of the position adjuster over time is compared with a desired behaviour over time formed using a model, an upper and a lower behaviour model limit being associated with said desired behaviour, and wherein if the actual behaviour of the position adjuster leaves the desired behaviour range formed by the two behaviour model limits, the position adjuster is actuated under additional consideration of this deviation between the actual behaviour and the desired behaviour or the limit of the desired behaviour range,
**characterised in that** the adjusting speed of the position adjuster, selected to adjust the actual behaviour to the desired behaviour, is reduced compared to the maximum possible adjuster dynamics and depends on the magnitude of the deviation here and/or on the time passed since leaving the desired behaviour range in such a way that higher dynamics are selected in the case of a smaller deviation in terms of amount and/or time than in the case of a larger deviation in terms of amount and/or time.

## Revendications

1. Procédé permettant de surveiller et de commander un organe de réglage de position en particulier dans un système de dynamique de roulage commandé ou régulé d'un véhicule automobile, selon lequel le comportement réel dans le temps de l'organe de réglage de position est comparé à un comportement de consigne dans le temps formé à partir d'un modèle auquel sont associées une limite de modèle de comportement supérieure et une limite de modèle de comportement inférieure, et, lorsque le comportement réel de l'organe de réglage de position quitte la zone de comportement de consigne formée par les deux limites de modèle de comportement, l'organe de réglage de position est commandé en tenant en outre compte de l'écart entre le comportement réel et le comportement de consigne ou la limite de la zone de comportement de consigne,
**caractérisé en ce que**
la vitesse de réglage de l'organe de réglage de position choisie pour égaliser le comportement réel et le comportement de consigne est réduite par rapport à la dynamique de l'organe de réglage maximum possible, et dépend ainsi de la grandeur de l'écart et/ou du temps passé depuis la sortie de la zone du comportement de consigne de sorte que dans le cas d'un plus faible écart dans le temps et/ou dans son montant, on choisisse une dynamique plus élevée que dans le cas d'un écart dans le temps et/ou dans son montant plus important.
